# EUROPÄISCHE PATENTSCHRIFT

(11) **EP 3 940 263 B1**
(45) Veröffentlichungstag und Bekanntmachung des Hinweises auf die Patenterteilung: **10.01.2024**
(21) Anmeldenummer: 21181565.9
(22) Anmeldetag: 24.06.2021
(51) Int. Cl.: F16H 25/24, F16H 57/04, B29C 45/50, B29C 45/83

(54) **KUNSTSTOFFVERARBEITUNGSMASCHINE, INSBESONDERE SPRITZGIESSMASCHINE**
PLASTICS PROCESSING MACHINE, IN PARTICULAR INJECTION MOULDING MACHINE
MACHINE D'USINAGE DE MATIÈRES PLASTIQUES, EN PARTICULIER MACHINE DE MOULAGE PAR INJECTION

(30) Priorität: 16.07.2020 DE 102020118884
(43) Veröffentlichungstag der Anmeldung: 19.01.2022
(73) Patentinhaber: Wittmann Battenfeld GmbH, 2542 Kottingbrunn (AT)
(72) Erfinder: Brunbauer, Klaus, 2540 Bad Vöslau (AT); Trimmel, Michael, 7301 Deutschkreutz (AT)
(74) Vertreter: Gosdin, Carstensen & Partner Patentanwälte Partnerschaftgesellschaft mbB

(56) Entgegenhaltungen:
- EP-A1- 3 081 836
- EP-A1- 3 462 060
- DE-A1-102010 051 766
- JP-A- 2003 011 196

## Beschreibung

Die Erfindung betrifft eine Kunststoffverarbeitungsmaschine, insbesondere eine Spritzgießmaschine, umfassend ein erstes Bauteil, welches relativ zu einem zweiten Bauteil in eine translatorische Richtung verschieblich angeordnet ist, wobei zur Durchführung einer relativen translatorischen Bewegung mindestens ein Gewindetrieb vorhanden ist, wobei der Gewindetrieb eine Gewindemutter umfasst, die mit dem einen der beiden Bauteile verbunden ist, und eine Gewindespindel umfasst, die mit dem anderen der beiden Bauteile direkt oder indirekt (beispielsweise über ein Getriebeelement) verbunden ist, wobei die Gewindemutter einen ersten axialen Endbereich und einen zweiten axialen Endbereich aufweist, wobei im ersten axialen Endbereich der Gewindemutter eine Dichtung angeordnet ist, die den Austritt von Schmiermittel aus der Gewindemutter verhindert, und wobei benachbart zum ersten axialen Endbereich der Gewindemutter ein Zuführelement für die Zugabe von Schmiermittel angeordnet ist, mit dem Schmiermittel in das Innere der Gewindemutter eingegeben werden kann.

Eine gattungsgemäße Maschine offenbart die JP 2003 011196 A. Eine ähnliche Lösung zeigt die DE 10 2010 051 766 A1.

Insbesondere in elektrisch angetriebenen Spritzgießmaschinen werden häufig (Schwerlast-)Kugelgewindegetriebe zur Umsetzung einer motorischen Drehbewegung in eine Linearbewegung verwendet. Aufgrund der hohen Belastung bzw. der hohen Axialkräfte ist eine geeignete Schmierung erforderlich. Hierfür bewährt haben sich automatische Zentralschmierungen, welche zyklisch eine definierte Menge Schmierstoff (meistens an mehreren Stellen, zwecks guter Verteilung zumeist an 3 bis 4 Stellen) in den Kugelgewindetrieb fördern. Dies ist zweckmäßig, da sich einerseits der Schmierstoff durch die hohe Belastung verbraucht, andererseits aber der Schmierstoff auch durch eine unzureichende Abdichtung (wegen zumeist eingesetzter Abstreifer) verloren geht und somit ersetzt werden muss.

Durch Einsatz entsprechend effektiver Dichtungen kann erreicht werden, dass Schmierstoffverluste erheblich reduzieren werden.

Durch die permanente, zyklische Zuführung von Schmierstoff in den Kugelgewindetrieb liegt es allerdings auf der Hand, dass sowohl verbrauchter Schmierstoff als auch zum Teil Frischfett an beiden axialen Enden des Kugelgewindetriebs durch die Abstreifer bzw. in geringerem Ausmaß auch durch die Abdichtungen hindurch austritt. In der weiteren Folge findet dadurch nachteilig eine undefinierte Verunreinigung der Umgebung mit einem Gemisch aus Alt- und Frischfett statt.

Der Erfindung liegt die **Aufgabe** zugrunde, eine Kunststoffverarbeitungsmaschine der eingangs genannten Art so fortzubilden, dass generell die Schmierung des Gewindetriebs verbessert wird. Dabei wird insbesondere angestrebt, einen Frischfett-Austrag zu vermeiden und gleichzeitig einen definierten Austrag von altem bzw. verbrauchtem Fett zu gewährleisten. Damit soll es möglich sein, den Verbrauch an Schmiermittel, insbesondere in Form von Schmierfett, zu reduzieren.

Die Lös u n g dieser Aufgabe wird mit einer Kunststoffverarbeitungsmaschine gemäß Anspruch 1 erreicht.

Durch diese Ausgestaltung wird mit einfachen Mitteln eine quasi erzwungene Führung des Schmiermittels und insbesondere des Schmierfetts erreicht, so dass die oben gestellte Aufgabe gelöst werden kann.

Der Gewindetrieb ist vorzugsweise ein Kugelgewindetrieb.

Das Zuführelement ist bevorzugt in einem axialen Abstand vom ersten axialen Endbereich der Gewindemutter angeordnet ist, der kleiner als 10 % des axialen Abstands zwischen der Dichtung und dem Abstreifer beträgt. Somit wird also das Schmiermittel nahe des ersten axialen Endbereichs der Gewindemutter eingegeben. Wegen der hier gegebenen hohen Dichtwirkung der Dichtung muss sich das Schmiermittel in axiale Richtung durch den Kugelgewindetrieb bewegen, um in den Bereich des Abstreifers zu gelangen, wo es dann in geringen Mengen austreten kann.

Die Dichtung ist zu diesem Zweck bevorzugt ausgebildet, mit einer Dichtlippe in die Profilierung der Gewindespindel formkongruent einzugreifen. Solche Dichtungen sind für Kugelgewindetriebe beispielsweise von der Nippon Seiko K.K. (NSK) unter der Bezeichnung "A1"-Dichtungssystem erhältlich.

Der Abstreifer besteht bevorzugt aus Gummimaterial, insbesondere aus Acrylnitril-Butadien-Kautschuk. Er dichtet nicht vollständig das Innere des Kugelgewindetriebs ab, sondern erlaubt einen geringfügigen Austrag von (verbrauchtem) Schmiermittel bzw. macht einen solchen Austrag unvermeidbar.

Das Auffangelement kann eine verschließbare Entnahmeöffnung für verbrauchtes Schmiermittel aufweisen. Ferner kann es ein Sichtfenster aufweisen, mit dem in einfacher Weise kontrolliert werden kann, wie voll das Auffangelement ist.

Das Zuführelement für die Zugabe von Schmiermittel steht bevorzugt mit einer Zentralschmierung in Verbindung oder ist Teil einer solchen.

Vorzugsweise ist für einen Gewindetrieb nur ein einziges Zuführelement vorhanden.

Mit der vorgeschlagenen Ausgestaltung wird erreicht, dass ausschließlich verbrauchtes Schmiermittel aus dem Kugelgewindetrieb ausgetragen wird. Dies erfolgt durch einfache Maßnahmen, so dass eine kostengünstige Umsetzung möglich ist.

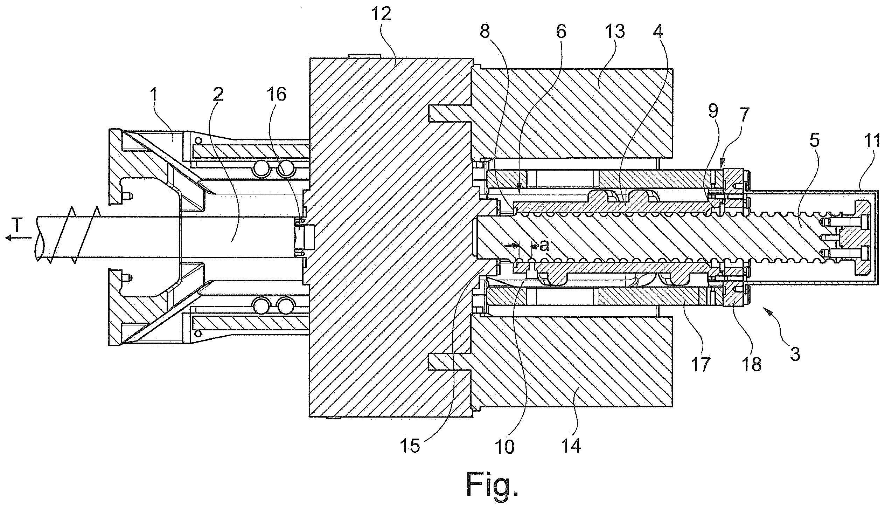

In der Zeichnung ist ein Ausführungsbeispiel der Erfindung dargestellt. Die einzige Figur zeigt einen Teil einer Spritzgießmaschine, bei der zwei Bauteile relativ zueinander translatorisch mittels eines Kugelgewindetriebs bewegt werden.

In der Figur ist ein Abschnitt einer Spritzgießmaschine dargestellt, bei dem ein zweites Bauteil 2 in Form einer Einspritzschnecke in translatorische Richtung T relativ zu einem ersten Bauteil 1 bewegt werden kann (wobei das erste Bauteil 1 eine Traverse 17 umfasst, s. unten, und von einem Düsenfahrzylinder bewegt werden kann). Die relative translatorische Bewegung dient also vorliegend zum axialen Verschieben der Einspritzschnecke 2. Es kann sich bei den beiden Bauteilen 1, 2 allerdings auch um beliebige andere Bauteile der Maschine handeln, die im Betrieb relativ zueinander translatorisch bewegt werden müssen, wie beispielsweise um Werkzeugteile oder um Teile eines Auswerfersystems.

Im dargestellten Ausführungsbeispiel ist ein Doppelgetriebe 12 für die Einspritz- und Dosierbewegung vorgesehen, welches einen Motor 13 für das Einspritzen und einen Motor 14 für das Dosieren umfasst. Zum Antrieb des nachfolgend beschriebenen Gewindetriebs 3 ist ein Abtrieb mit Kupplung 15 vorgesehen. Die Einspritzschnecke 2 ist über eine Schneckenkupplung 16 mit dem Doppelgetriebe 12 verbunden. Der Gewindetrieb 3 wird von der Traverse 17 aufgenommen. Zur Erfassung der axialen Kraft während des Betriebs der Maschine ist ein Kraftsensor 18 vorgesehen.

Für die besagte relative translatorische Bewegung wird ein Gewindetrieb 3 eingesetzt, der hier als Gewindekugeltrieb ausgebildet ist. Der Gewindetrieb 3 hat eine Gewindemutter 4, die fest mit dem Bauteil 1 bzw. mit dessen Traverse 17 verbunden ist, und eine Gewindespindel 5, die (über das Doppelgetriebe 12) mit dem Bauteil 2 in Verbindung steht.

Die Gewindemutter 4 weist einen ersten axialen Endbereich 6 und einen zweiten axialen Endbereich 7 auf; der Abstand dieser beiden Endbereiche 6, 7 entspricht im wesentlichen der axialen Erstreckung der Gewindemutter 4 in translatorische Richtung T.

Zwecks gezielter Führung des Schmiermittels (Schmierfetts), welches zur Schmierung des Gewindetriebs 3 benötigt wird, ist folgende Ausgestaltung vorgesehen:
Im ersten axialen Endbereich 6 der Gewindemutter 4 ist eine Dichtung 8 angeordnet. Diese ist so ausgeführt (siehe die Ausführungen oben im Zusammenhang mit der "A1"-Dichtung), dass ein Austritt von Schmiermittel aus der Gewindemutter 4 im Wesentlichen verhindert wird.

Im zweiten axialen Endbereich 7 der Gewindemutter 4 ist ein Abstreifer 9 angeordnet. Dieser hält zwar auch Schmiermittel im Inneren der Gewindemutter 4 zurück, ist aber keine eigentliche Dichtung, sondern erschwert lediglich den Austritt von Schmiermittel aus der Gewindemutter 4.

Benachbart zum ersten axialen Endbereich 6 der Gewindemutter 4 ist ein Zuführelement 10 für die Zugabe von Schmiermittel angeordnet. Bevorzugt handelt es sich dabei um einen Teil einer Zentralschmieranlage, mit der periodisch frisches Schmiermittel in die Gewindemutter 4 eingebracht werden kann.

Bezüglich der Lage des Zuführelements 10 ist ein axialer Abstand a in die Figur eingetragen, der den Abstand markiert, der zwischen der Dichtung 8 und dem Zuführelement 10 vorliegt. Bevorzugt beträgt dieser Abstand a maximal 10 % des axialen Abstands, der zwischen der Dichtung 8 und dem Abstreifer 9 vorliegt.

Bevorzugt ist lediglich ein einziges Zuführelement 10 vorgesehen.

Durch diese Ausgestaltung ergibt sich, dass das zyklisch zugeführte Frischfett definiert in Richtung des am anderen Ende der Gewindemutter 4 angeordneten Abstreifers 9 wandert, da dies den Weg des geringsten Widerstands darstellt. Das Frischfett durchläuft somit alle Belastungsstellen des Gewindetriebs 3 und kann sich so bis zum definierten Austritt (im Bereich des Abstreifers 9) abarbeiten.

Gemäß der Erfindung ist ein topfförmig ausgebildetes Auffangelement 11 am zweiten axialen Endbereich der Gewindemutter 4 angeordnet, d. h. dort, wo sich der Abstreifer 9 befindet. Damit wird es möglich, das am Abstreifer 9 austretendes Alt- bzw. Verbrauchtfett mittels des Auffangelements 11 an einer vorgegebenen Stelle zu sammeln und somit unerwünschte Verunreinigungen zu vermeiden.

Nicht näher dargestellt ist, dass das Auffangelement 11 mit einem Sichtfenster zur Füllstanderkennung versehen ist. Gleichermaßen ist eine Entleermöglichkeit gegeben.

Somit ist ein gekapseltes Schmiersystem mit Altfettsammelvorrichtung bereitgestellt.

Der Schmierstoffverbrauch kann durch die Vermeidung von Frischfett-Austrag erheblich reduziert werden.

### Bezugszeichenliste:

- 1: erstes Bauteil
- 2: zweites Bauteil (Einspritzschnecke)
- 3: Gewindetrieb
- 4: Gewindemutter (feststehend)
- 5: Gewindespindel (drehangetrieben)
- 6: erster axialer Endbereich der Gewindemutter
- 7: zweiter axialer Endbereich der Gewindemutter
- 8: Dichtung
- 9: Abstreifer
- 10: Zuführelement für die Zugabe von Schmiermittel
- 11: Auffangelement
- 12: Doppelgetriebe für Einspritz- und Dosierbewegung
- 13: Motor für Einspritzen
- 14: Motor für Dosieren
- 15: Abtrieb mit Kupplung
- 16: Schneckenkupplung
- 17: Traverse (Teil des ersten Bauteils)
- 18: Kraftsensor

- T: translatorische Richtung
- a: axialer Abstand

## Patentansprüche

1. Kunststoffverarbeitungsmaschine, insbesondere Spritzgießmaschine, umfassend ein erstes Bauteil (1), welches relativ zu einem zweiten Bauteil (2) in eine translatorische Richtung (T) verschieblich angeordnet ist, wobei zur Durchführung einer relativen translatorischen Bewegung mindestens ein Gewindetrieb (3) vorhanden ist, wobei der Gewindetrieb (3) eine Gewindemutter (4) umfasst, die mit dem einen der beiden Bauteile (1) verbunden ist, und eine Gewindespindel (5) umfasst, die mit dem anderen der beiden Bauteile (2) direkt oder indirekt verbunden ist, wobei die Gewindemutter (4) einen ersten axialen Endbereich (6) und einen zweiten axialen Endbereich (7) aufweist, wobei im ersten axialen Endbereich (6) der Gewindemutter (4) eine Dichtung (8) angeordnet ist, die den Austritt von Schmiermittel aus der Gewindemutter (4) verhindert, und wobei benachbart zum ersten axialen Endbereich (6) der Gewindemutter (4) ein Zuführelement (10) für die Zugabe von Schmiermittel angeordnet ist, mit dem Schmiermittel in das Innere der Gewindemutter (4) eingegeben werden kann, wobei am zweiten axialen Endbereich (7) der Gewindemutter (4) ein Auffangelement (11) für die Aufnahme von verbrauchtem Schmiermittel angeordnet ist,
**dadurch gekennzeichnet,**
**dass** im zweiten axialen Endbereich (7) der Gewindemutter (4) ein Abstreifer (9) angeordnet ist, der den Austritt von Schmiermittel aus der Gewindemutter (4) erschwert, wobei das Zuführelement (10) in einem axialen Abstand (a) vom ersten axialen Endbereich (6) der Gewindemutter (4) angeordnet ist, der kleiner als 25 % des axialen Abstands zwischen der Dichtung (8) und dem Abstreifer (9) beträgt und wobei das Auffangelement (11) als topfförmiges Gebilde ausgebildet ist, welches mit seinem offenen Ende am zweiten axialen Endbereich (7) der Gewindemutter (4) befestigt ist.

2. Kunststoffverarbeitungsmaschine nach Anspruch 1, **dadurch gekennzeichnet, dass** der Gewindetrieb (3) ein Kugelgewindetrieb ist.

3. Kunststoffverarbeitungsmaschine nach Anspruch 1 oder 2, **dadurch gekennzeichnet, dass** das Zuführelement (10) in einem axialen Abstand (a) vom ersten axialen Endbereich (6) der Gewindemutter (4) angeordnet ist, der kleiner als 10 % des axialen Abstands zwischen der Dichtung (8) und dem Abstreifer (9) beträgt.

4. Kunststoffverarbeitungsmaschine nach einem der Ansprüche 1 bis 3, **dadurch gekennzeichnet, dass** die Dichtung (8) ausgebildet ist, mit einer Dichtlippe in die Profilierung der Gewindespindel (5) formkongruent einzugreifen.

5. Kunststoffverarbeitungsmaschine nach einem der Ansprüche 1 bis 4, **dadurch gekennzeichnet, dass** der Abstreifer (9) aus Gummimaterial, insbesondere aus Acrylnitril-Butadien-Kautschuk (NBR), besteht.

6. Kunststoffverarbeitungsmaschine nach einem der Ansprüche 1 bis 5, **dadurch gekennzeichnet, dass** das Auffangelement (11) eine verschließbare Entnahmeöffnung für verbrauchtes Schmiermittel aufweist.

7. Kunststoffverarbeitungsmaschine nach einem der Ansprüche 1 bis 6, **dadurch gekennzeichnet, dass** das Auffangelement (11) ein Sichtfenster aufweist.

8. Kunststoffverarbeitungsmaschine nach einem der Ansprüche 1 bis 7, **dadurch gekennzeichnet, dass** das Zuführelement (10) für die Zugabe von Schmiermittel mit einer Zentralschmierung in Verbindung steht oder Teil einer solchen ist.

9. Kunststoffverarbeitungsmaschine nach einem der Ansprüche 1 bis 8, **dadurch gekennzeichnet, dass** für einen Gewindetrieb (3) nur ein einziges Zuführelement (10) vorhanden ist.

## Claims

1. Plastics processing machine, in particular injection moulding machine, comprising a first component (1) which is arranged to be displaceable relative to a second component (2) in a translatory direction (T), wherein at least one screw drive (3) is provided for carrying out a relative translatory movement, wherein the screw drive (3) comprises a threaded nut (4) which is connected to one of the two components (1), and comprises a threaded spindle (5) which is connected directly or indirectly to the other of the two components (2), wherein the threaded nut (4) has a first axial end region (6) and a second axial end region (7), wherein a seal (8) is arranged in the first axial end region (6) of the threaded nut (4), which seal prevents lubricant from escaping from the threaded nut (4), and wherein a feed element (10) for the addition of lubricant is arranged adjacent to the first axial end region (6) of the threaded nut (4), with which lubricant can be fed into the interior of the threaded nut (4), wherein a collecting element (11) for collecting used lubricant is arranged at the second axial end region (7) of the threaded nut (4),
**characterized in**
**that** a wiper (9) is arranged in the second axial end region (7) of the threaded nut (4), which impedes lubricant to escape from the threaded nut (4), wherein the feed element (10) being arranged at an axial distance (a) from the first axial end region (6) of the threaded nut (4) which is less than 25 % of the axial distance between the seal (8) and the wiper (9), and wherein the collecting element (11) is designed as a pot-shaped structure which is fastened with its open end to the second axial end region (7) of the threaded nut (4).

2. Plastics processing machine according to claim 1, **characterised in that** the screw drive (3) is a ball screw drive.

3. Plastics processing machine according to claim 1 or 2, **characterised in that** the feed element (10) is arranged at an axial distance (a) from the first axial end region (6) of the threaded nut (4) which is less than 10 % of the axial distance between the seal (8) and the wiper (9).

4. Plastics processing machine according to one of claims 1 to 3, **characterised in that** the seal (8) is designed to engage with a sealing lip in the profiling of the threaded spindle (5) in a shape-congruent manner.

5. Plastics processing machine according to one of claims 1 to 4, **characterised in that** the wiper (9) is made of rubber material, in particular acrylonitrile butadiene rubber (NBR).

6. Plastics processing machine according to one of claims 1 to 5, **characterised in that** the collecting element (11) has a closable removal opening for used lubricant.

7. Plastics processing machine according to one of claims 1 to 6, **characterised in that** the collecting element (11) has a viewing window.

8. Plastics processing machine according to one of claims 1 to 7, **characterised in that** the feed element (10) for the addition of lubricant is connected to a central lubrication system or is part of such a system.

9. Plastics processing machine according to one of claims 1 to 8, **characterised in that** only a single feed element (10) is provided for a screw drive (3).

## Revendications

1. Machine d'usinage de matières plastiques, notamment machine de moulage par injection, comprenant un premier composant (1) qui est agencé de manière mobile dans une direction de translation (T) par rapport à un deuxième composant (2), au moins une vis d'entraînement (3) étant présente pour l'exécution d'un mouvement de translation relatif, la vis d'entraînement (3) comprenant un écrou fileté (4) qui est relié à l'un des deux composants (1), et comprenant une broche filetée (5) qui est reliée directement ou indirectement à l'autre des deux composants (2), l'écrou fileté (4) présentant une première zone d'extrémité axiale (6) et une deuxième zone d'extrémité axiale (7), un joint d'étanchéité (8) étant agencé dans la première zone d'extrémité axiale (6) de l'écrou fileté (4), lequel joint d'étanchéité empêche la sortie de lubrifiant de l'écrou fileté (4), et un élément d'amenée (10) pour l'ajout de lubrifiant étant agencé au voisinage de la première zone d'extrémité axiale (6) de l'écrou fileté (4), avec lequel du lubrifiant peut être introduit à l'intérieur de l'écrou fileté (4), un élément de collecte (11) pour la réception de lubrifiant usé étant agencé au niveau de la deuxième zone d'extrémité axiale (7) de l'écrou fileté (4),
**caractérisée en ce que**
dans la deuxième zone d'extrémité axiale (7) de l'écrou fileté (4) est agencé un racleur (9), qui rend difficile la sortie de lubrifiant de l'écrou fileté (4), l'élément d'amenée (10) étant agencé à une distance axiale (a) de la première zone d'extrémité axiale (6) de l'écrou fileté (4), qui est inférieure à 25 % de la distance axiale entre le joint d'étanchéité (8) et le racleur (9), et l'élément de collecte (11) étant réalisé en tant que structure en forme de pot qui est fixée par son extrémité ouverte à la deuxième zone d'extrémité axiale (7) de l'écrou fileté (4).

2. Machine d'usinage de matières plastiques selon la revendication 1, **caractérisée en ce que** la vis d'entraînement (3) est une vis d'entraînement à billes.

3. Machine d'usinage de matières plastiques selon la revendication 1 ou 2, **caractérisée en ce que** l'élément d'amenée (10) est agencé à une distance axiale (a) de la première zone d'extrémité axiale (6) de l'écrou fileté (4) qui est inférieure à 10 % de la distance axiale entre le joint d'étanchéité (8) et le racleur (9).

4. Machine d'usinage de matières plastiques selon l'une quelconque des revendications 1 à 3, **caractérisée en ce que** le joint d'étanchéité (8) est réalisé pour s'engager par une lèvre d'étanchéité dans le profil de la broche filetée (5) de manière congruente par la forme.

5. Machine d'usinage de matières plastiques selon l'une quelconque des revendications 1 à 4, **caractérisée en ce que** le racleur (9) est constitué de matériau en caoutchouc, notamment de caoutchouc d'acrylonitrile-butadiène (NBR).

6. Machine d'usinage de matières plastiques selon l'une quelconque des revendications 1 à 5, **caractérisée en ce que** l'élément de collecte (11) présente une ouverture de soutirage obturable pour le lubrifiant usé.

7. Machine d'usinage de matières plastiques selon l'une quelconque des revendications 1 à 6, **caractérisée en ce que** l'élément de collecte (11) présente une fenêtre de visualisation.

8. Machine d'usinage de matières plastiques selon l'une quelconque des revendications 1 à 7, **caractérisée en ce que** l'élément d'amenée (10) pour l'ajout de lubrifiant est en liaison avec un système de lubrification central ou fait partie d'un tel système.

9. Machine d'usinage de matières plastiques selon l'une quelconque des revendications 1 à 8, **caractérisée en ce que** seul un élément d'amenée (10) individuel est présent pour une vis d'entraînement (3).
